# EUROPÄISCHE PATENTANMELDUNG

(11) **EP 2 345 986 A1**
(43) Veröffentlichungstag der Anmeldung: **20.07.2011**
(21) Anmeldenummer: 10150723.4
(22) Anmeldetag: 14.01.2010
(51) Int. Cl.: G06Q 20/00, G06Q 30/00

(54) **Verfahren zur Erfassung von Finanztransaktionen**

(71) Anmelder: Deutsche Telekom AG, 53113 Bonn (DE)
(72) Erfinder: Trinkel, Marian, 52372 Kreuzau OT Untermaubach (DE)

(57) **Zusammenfassung**

Die Erfindung betrifft ein Verfahren zur Erfassung von Finanztransaktionen, insbesondere von Bezahlvorgängen, die mittels wenigstens einem Transaktionssystem (1) über ein Telekommunikationsnetzwerk (2) abgewickelt werden, bei dem zumindest ein Teil der Daten einer Telekommunikation zur Durchführung einer Finanztransaktion mittels wenigstens einem Transaktionssystem (1), insbesondere Daten über die Höhe eines transferierten Geldbetrages, wenigstens einer Gruppe (G1, GN) von mehreren Transaktionssystemen (1) verschiedener Eigentümer zugeordnet wird, wobei die der wenigstens einen Gruppe (G1, GN) zugeordneten Daten (D(G1)) in einer Datenbank (DB2), insbesondere einer Datenbank (DB2) innerhalb eines Telekommunikationsnetzwerks (2) gespeichert werden. Die Erfindung betrifft auch ein System zur Erfassung von Finanztransaktionen.

## Beschreibung

Die Erfindung betrifft ein Verfahren zur Erfassung von Finanztransaktionen, insbesondere von Bezahlvorgängen, wobei diese Finanztransaktionen mittels wenigstens eines Transaktionssystems über ein Telekommunikationsnetzwerk abgewickelt werden.

Es ist allgemein im Stand der Technik bekannt, dass Finanztransaktionen, insbesondere Bezahlvorgänge, immer häufiger bargeldlos durchgeführt werden, wofür üblicherweise ein oder auch mehrere an ein Telekommunikationsnetzwerk angebundene Transaktionssysteme verwendet werden.

Ein Beispiel hierfür bildet ein Bezahlvorgang an einer Supermarktkasse mittels einer Scheckkarte. Durch das Transaktionssystem der Supermarktkasse werden die Scheckkartendaten eingelesen und über ein Telekommunikationsnetzwerk überprüft. Im Rahmen der Telekommunikation wird der Inhaber der Scheckkarte identifiziert, gegebenenfalls seine Bonität bzw. Kontodeckung überprüft und ein zu zahlender Betrag von dem Konto des identifizierten Scheckkarteninhabers auf das Konto des Supermarktes überwiesen bzw. per Lastschrift eingezogen.

Es sind weitere Transaktionssysteme bekannt geworden, bei denen sich eine Person, die einen Bezahlvorgang durchführen möchte, z.B. auch biometrisch identifizieren kann, beispielsweise mittels eines Fingerabdrucks. So sind auch Kassensysteme eingeführt worden, die einen Fingerabdruckscanner aufweisen, um eine Person zu identifizieren, um sodann von einem Konto der identifizierten Person fällige Beträge einzuziehen und an den Eigentümer des Transaktionssystems zu transferieren.

Bezahlvorgänge können beispielsweise auch über ein Mobiltelefon als weiteres beteiligtes Transaktionssystem durchgeführt werden, in einer Ausführung z.B. dadurch, dass sich ein Mobiltelefon z.B. mittels einer Nahfeldkommunikation, z.B. über RFID, an einem anderen Transaktionssystem identifiziert, z.B. durch Übertragung spezifischer Identifikationsdaten, wie beispielsweise die Mobilrufnummer, eine Gerätekennung oder eine Adresskennung im Mobilfunknetz, wobei anhand dieser Daten wiederum der Eigentümer des Mobiltelefons identifiziert werden kann, um sodann von dessen Konto Gelder zur Bezahlung an das Konto des Eigentümers des anderen Transaktionssystem zu transferieren.

In einer anderen Ausführung kann es auch vorgesehen sein, mit einem Mobiltelefon eine Verkaufsvorrichtung, z.B. einen Warenautomaten, anzurufen und so durch den Anruf eine Bezahlung über die Mobiltelefonrechnung durchzuführen.

Bargeldlose Transaktionsverfahren haben demnach im Wesentlichen gemeinsam, dass im Rahmen der Durchführung einer solchen Finanztransaktion der Eigentümer des wenigstens einen beteiligten Transaktionssystem, insbesondere die Eigentümer aller beteiligten Transaktionssysteme identifiziert werden, insbesondere durch den Transaktionssystemen eigene Kennungen, die den Eigentümern in Form von natürlichen oder juristischen Person zugeordnet sind, wobei sodann bargeldlos die gewünschten Beträge zwischen den Konten der identifizierten Eigentümer transferiert werden.

Im Stand der Technik ist es weiterhin bekannt, dass natürliche oder juristische Personen, die an Finanzgeschäften teilnehmen, steuerpflichtig sind, jedoch oftmals versuchen, ihre gesetzlich geregelte Steuerpflicht durch Falschangaben gegenüber den Steuerbehörden zu reduzieren. Solche Falschangaben können z.B. darin liegen, dass gemachte Umsätze, insbesondere gemachte Geldeinnahmen, insbesondere Gewinne nicht oder nicht korrekt deklariert werden.

Häufig können nach dem bisherigen Stand der Technik derartige Steuerhinterziehungen nur durch aufwändige Steuerprüfungen mit hohem personellen Einsatz aufgedeckt werden. Dabei müssen solche Steuerprüfungen routinemäßig durchgeführt werden, wenn sich kein Verdacht ergibt.

Vor dem Hintergrund der Tatsache, dass bereits heute und zukünftig immer mehr Finanztransaktionen bargeldlos durchgeführt werden, ist es die Aufgabe der Erfindung, ein Verfahren bereitzustellen, mittels dem Finanztransaktionen erfasst und ausgewertet werden können. Insbesondere soll das Verfahren geeignet sein, steuerliche Angaben von juristischen oder natürlichen Personen zumindest auf eine Plausibilität zu überprüfen. Dabei ist es weiterhin eine bevorzugte Aufgabe der Erfindung, eine solche Prüfung, insbesondere Plausibilitätsprüfung, in Übereinstimmung mit Datenschutzrichtlinien, insbesondere zunächst unter Wahrung der Anonymität durchführen zu können.

Diese Aufgabe wird erfindungsgemäß dadurch gelöst, dass zumindest ein Teil der Daten einer Telekommunikation zur Durchführung einer Finanztransaktion mit wenigstens einem Finanztransaktionssystem oder zwischen zwei Finanztransaktionssystem, insbesondere Daten über die Höhe eines transferierten Geldbetrags, wenigstens einer Gruppe von mehreren Transaktionssystemen verschiedener Eigentümer zugeordnet wird, wobei die der wenigstens einen Gruppe zugeordneten Daten in einer Datenbank, insbesondere einer Datenbank innerhalb eines Telekommunikationssystems, gespeichert werden.

Unter einem Transaktionssystem im Sinne der Erfindung wird hierbei jegliches System verstanden, welches in die Telekommunikation zur Durchführung einer Finanztransaktion eingebunden ist und insbesondere dazu geeignet bzw. eingerichtet ist, den Eigentümer dieses Transaktionssystems zu identifizieren, insbesondere um eine Geldtransaktion bezogen auf eine Kontoverbindung dieses Eigentümers vornehmen zu können.

In einem möglichen Fall kann demnach ein solches Transaktionssystem z.B. gebildet werden durch ein Kassensystem, welches geeignet ist, Identifikationsmittel eines Eigentümers zu überprüfen, wie beispielsweise Scheckkarten oder Kreditkarten. Ein solches Transaktionssystem kann auch wie eingangs genannt eine biometrische Identifikationseinheit, wie beispielsweise einen Fingerabdruckscanner etc. umfassen oder dazu eingerichtet sein, mit Mobiltelefonen, z.B. von Kunden zu kommunizieren.

Der wesentliche Kerngedanke des Verfahrens liegt darin, die Finanztransaktionen, die von mehreren Transaktionssystemen mehrere verschiedener Eigentümer durchgeführt werden, wobei die Eigentümer natürliche oder juristische Personen sein können, zu erfassen, wobei diese Finanztransaktionen jedoch nicht individuell zu jeder Person bzw. jedem Eigentümer erfasst werden, was gegebenenfalls gegen landesspezifische Datenschutzrichtlinien verstoßen könnte, sondern vielmehr derart vorgegangen wird, dass die Finanztransaktionen zu einer Gruppe von mehreren Eigentümern, wie natürlichen oder juristischen Personen, erfasst werden. Durch die Erfassung nicht zu einer individuellen Person, sondern lediglich zu einer Gruppe von mehreren Personen, wird zumindest zunächst die Anonymität jeder Person innerhalb der Gruppe gewahrt, insbesondere da die die individuelle Transaktion zumindest zunächst nicht unmittelbar einer bestimmten Person der Gruppe zugeordnet werden kann.

Die technische Realisierung der Zusammenfassung von mehreren Eigentümer / Personen zu einer Gruppe erfolgt erfindungsgemäß dadurch, dass die Transaktionssysteme verschiedener Eigentümer, wie beispielsweise natürlicher oder juristischer Personen, durch eine Zuordnung zu einer Gruppe zusammengefasst werden. Es besteht hierdurch sodann die Möglichkeit, zumindest einen Teil der Daten einer Telekommunikation zur Durchführung einer Finanztransaktion mittels wenigstens einem Transaktionssystem einer solchen Gruppe oder auch mehreren Gruppen von Transaktionssystemen und damit gleichzeitig den Eigentümern zuzuordnen, denen das wenigstens eine an der Transaktion beteiligte Transaktionssystem gehört.

Eine Gruppe kann z.B. durch wenigstens eine Funkzelle, durch Kommunikationsadressen, Kommunikationsadressräume, Gerätekennungen etc. definiert werden.

In einer Datenbank, die beispielsweise innerhalb des benutzten Telekommunikationssystems vorhanden sein kann, können dabei erfindungsgemäß die Daten oder Teile davon gespeichert werden, wobei es vorgesehen sein kann, dass die Speicherung zumindest derart erfolgt, dass die gespeicherten Daten zumindest zu derjenigen Gruppe zugeordnet sind, die ein Transaktionssystem desjenigen Eigentümers umfasst, der eine Zahlung erhält.

Erfindungsgemäß besteht die Möglichkeit, aus all den Daten, die im Rahmen der Finanztransaktionen von Transaktionssystemen einer Gruppe durchgeführt werden und die in die Datenbank zu dieser Gruppe gespeichert werden, die Summe der Geldbeträge zu bilden, die der Gruppe zufließen und/oder von der Gruppe abfließen. Es liegt damit in der Datenbank eine Information darüber vor, welche Umsätze, insbesondere welche Geldeinnahmen oder sogar welche Gewinne alle Mitglieder dieser Gruppe getätigt haben, insbesondere innerhalb eines vorgegebenen Zeitraums, wie beispielsweise eines Jahreszeitraums.

Sofern die einzelnen Gruppenmitglieder (natürliche oder juristische Personen) ihre steuerlichen Erklärungen abgeben, insbesondere durch elektronische Übermittlung der Erklärungsdaten mittels eines Telekommunikationssystems, besteht die Möglichkeit, die Erklärungsdaten aller Personen einer Gruppe, also aller Eigentümer derjenigen Transaktionssysteme, die zu dieser Gruppe zusammengefasst sind, in der Gesamtheit zu betrachten und abzugleichen mit den Informationen, die während der Durchführung der Transaktionen in der Datenbank zu der betreffenden Gruppe gesammelt wurden. Stimmen die im Rahmen der persönlichen Erklärung aller Gruppenmitglieder gemachten Angaben nicht mit den auf elektronische Art und Weise bei der Durchführung der Finanztransaktion gesammelten Daten überein, so kann hieraus eine Information abgeleitet werden, dass zumindest ein Mitglied der gebildeten Gruppe keine korrekten Erklärungsangaben gemacht hat.

Es liegen demnach aus diesen Informationen Indizien vor, die es gegebenenfalls auch nach den verschiedenen gesetzlichen Datenschutzbestimmungen zu betrachtender Länder ermöglichen, die einzelnen Gruppen einer gezielteren steuerlichen Überprüfung zu unterziehen.

Um Gruppen zu bilden, in welche die Transaktionssysteme verschiedener Eigentümer bzw. somit indirekt die jeweiligen Eigentümer eingruppiert sind, kann grundsätzlich jegliches Kriterium herangezogen werden, wie beispielsweise die geografische Lage der betrachteten Eigentümer bzw. von deren Transaktionssystemen.

Hierbei kann es vorgesehen sein, eine geografische Lage in technische Informationen abzubilden. Dies kann beispielsweise dadurch erfolgen, dass jedes an einer Telekommunikation teilnehmende Transaktionssystem für die Durchführung einer Telekommunikation innerhalb eines Telekommunikationsnetzwerkes identifiziert werden muss. Hierfür sind üblicherweise Kennungen vorgesehen, die dem Telekommunikationssystem eindeutig zugeordnet sind, wie beispielsweise eine Gerätekennung oder eine Adresskennung innerhalb des Netzwerkes. Es kann demnach eine Zuordnung einer solchen Kennung von allen Transaktionssystemen innerhalb eines geografischen Gebietes zu einer Gruppe im Sinne der Erfindung erfolgen. So kann eine solche Gruppe z.B. gebildet werden durch die Transaktionssysteme, die in einer Liste von Kennungen gespeichert sind. Die Daten einer Transaktion eines solchen Transaktionssystems können sodann in die Gruppe zugeordnet werden, z.B. in einen Datensatz derjenigen Gruppe gespeichert werden, deren Liste eine Kennung dieses Transaktionssystems umfasst.

Die Zusammenfassung von Transaktionssystemen verschiedener Eigentümer zu einer Gruppe kann in einer Ausführung auch dadurch erfolgen, dass die Gruppe zumindest aus einem Teil der Daten bestimmt wird, die innerhalb eines Kommunikationsdatensatzes bei einer Transaktion übermittelt werden.

So ist es bekannt, dass im Rahmen einer Telekommunikation, die zur Durchführung der Transaktion abgewickelt wird, ein sogenannter Kommunikationsdatensatz gebildet wird, in dem zumindest die teilnehmenden Kommunikationsgeräte bzw. Transaktionssysteme identifiziert sind und der weiterhin die im Rahmen der Telekommunikation zu übertragenden Daten umfasst, wie z.B. die Personendaten der Eigentümer der beteiligten Transaktionssysteme, die Geldbeträge, Daten- oder Informationsinhalte, etc.

Eine mögliche Information, die innerhalb eines Kommunikationsdatensatzes bei einer Transaktion übermittelt wird, ist z.B. eine Information über eine Funkzelle, in welcher eine Transaktion mittels mobiler Telekommunikation abgewickelt wird. Beispielsweise kann es im Rahmen des Verfahrens vorgesehen sein, dass eine Person, die einen Bezahlvorgang vornehmen möchte, sich mit einem Mobiltelefon identifiziert. Im Rahmen dieses Bezahlvorgangs kann es vorgesehen sein, festzustellen, in welcher Funkzelle sich das Mobiltelefon befindet, mit welchem der Besitzer des Mobiltelefons identifiziert werden soll, um von dessen Konto einen Geldtransfer zu bewirken. Bei einer Finanztransaktion, bei welcher eine Mobilfunkkommunikation zumindest zum Teil eingesetzt wird, kann demnach eine Zuordnung des oder der Transaktionssysteme zu einer Gruppe mittels dieser Information über eine Funkzelle erfolgen.

In einer anderen Ausführung kann es auch vorgesehen sein, dass eine Gruppe bestimmt wird durch eine Information über eine Kommunikationskennung wenigstens eines der beteiligten Transaktionssysteme, insbesondere anhand einer Kennung, bevorzugt einer Gerätekennung oder Adresskennung innerhalb des genutzten Telekommunikationsnetzwerkes.

Wie eingangs erwähnt, hat jedes an einer Telekommunikation teilnehmende Kommunikationsgerät und somit auch jegliches Transaktionssystem im Rahmen der beschriebenen Erfindung eine individuelle Kennung, wie die beispielhaft genannte Gerätekennung oder Adresskennung innerhalb des Telekommunikationsnetzwerkes.

Dadurch dass diese Kennung im Rahmen eines Kommunikationsdatensatzes zwingend Verwendung findet, um die Kommunikation durchzuführen, kann der Kommunikationsdatensatz jederzeit innerhalb des Telekommunikationsnetzwerks mit seinem Inhalt, demnach also die kommunizierten Daten, wie beispielsweise Geldbeträge und/oder Informationsdaten über die Identität der beteiligten Personen eindeutig einer bestimmten Gruppe zugeordnet werden, insbesondere dadurch, dass ein Teil der Daten aus dem Kommunikationsdatensatz ausgelesen wird und überprüft wird, welcher Gruppe diese Daten zugeordnet sind.

Hier kann die Gruppe wiederum dadurch gebildet werden, dass eine Festlegung erfolgt, welche Transaktionssysteme mit welchen individuellen Kennungen zu dieser Gruppe zugeordnet sein soll, beispielsweise durch das Festlegen und Einschreiben der individuellen Kennungen in eine Liste.

Wird demnach erfindungsgemäß eine Finanztransaktion im Rahmen einer Telekommunikation durchgeführt, so kann durch Auslesen der Daten aus dem Telekommunikationsdatensatz, beispielsweise mittels eines zentral innerhalb des Telekommunikationsnetzwerkes angeordneten Servers, diejenige Gruppe bestimmt werden, zu welcher die kommunizierten Daten gespeichert werden sollen. Dabei kann es vorgesehen sein, dass nicht nur eine Gruppe, sondern gegebenenfalls auch mehrere Gruppen festgelegt werden, beispielsweise eine Gruppe, zu welcher das Telekommunikationssystem eines Zahlenden und eine andere Gruppe, zu welcher das Telekommunikationssystem eines die Zahlung empfangenden Transaktionssystems gehört.

Ein Ausführungsbeispiel der Erfindung ist in der nachfolgenden Figur näher beschrieben.

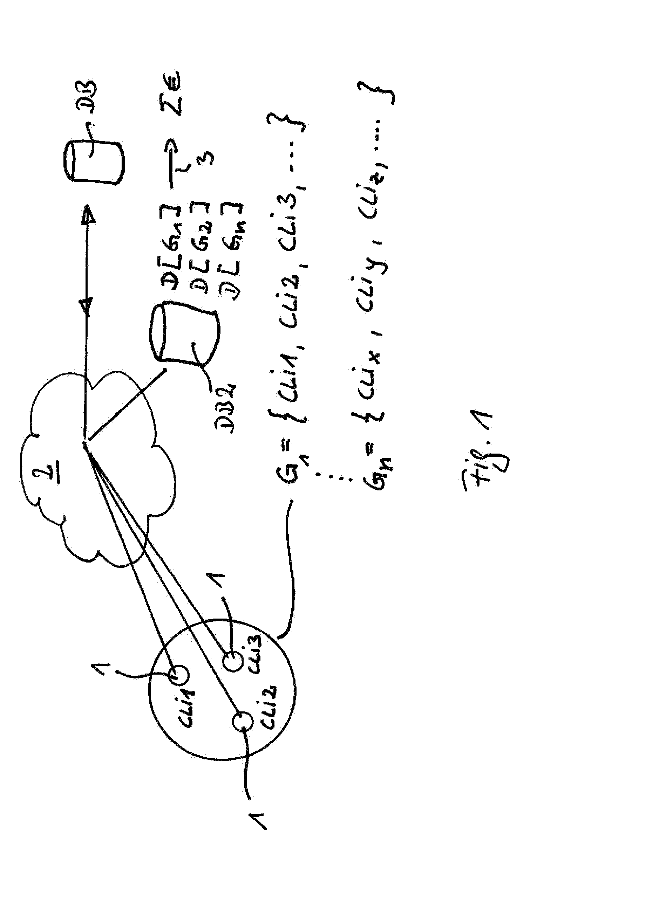

Die einzige Figur 1 zeigt in schematischer Darstellung eine Gruppe von Transaktionssystemen 1, wie beispielsweise Kassensysteme verschiedener Supermärkte. Lediglich aus Gründen der Übersichtlichkeit sind hier nur drei Transaktionssysteme dargestellt, die verschiedenen Eigentümern und damit natürlichen oder juristischen Personen zugeordnet sind. Es kann sich also beispielsweise um Kassensystem verschiedener Supermärkte handeln, ohne das erfindungsgemäße Verfahren hierauf zu beschränken.

In an sich bekannter Weise kommunizieren die Transaktionssysteme 1 über ein Telekommunikationsnetzwerk 2 mit einer Datenbank DB bzw. einem diese Datenbank aufweisenden Server, um beispielsweise eine bargeldlose Bezahlung von Waren vorzunehmen.

Ein Kunde verwendet hierfür beispielsweise seine Scheckkarte, Kreditkarte, seinen Fingerabdruck oder sonstiges Mittel, wie beispielsweise auch ein Mobiltelefon, um sich an dem Transaktionssystem 1 zu identifizieren. Durch die Telekommunikation über das Telekommunikationsnetzwerk 2 werden die Identifikationsdaten des Kunden sowie die Identifikationsdaten des jeweils betrachteten Transaktionssystems, also beispielsweise dessen Netzwerkkennung, hier als CLI 1, CLI 2 oder CLI 3 bezeichnet (CLI = Call Line Identity) über das Netzwerk versendet, so dass im Rahmen der Kommunikation mit der Datenbank DB eine bargeldlose Buchung des fälligen Zahlungsbetrags vom Konto des Kunden auf das Konto des Supermarktes erfolgen kann.

Im Rahmen einer jeglichen Kommunikation, um eine solche bargeldlose Bezahlung durchzuführen, wird ein Kommunikationsdatensatz gebildet, der im vorliegenden Fall zumindest das Transaktionssystem 1 identifiziert, nämlich anhand dessen Netzwerkkennung CLI 1, CLI 2 oder CLI 3.

Innerhalb des Telekommunikationsnetzwerks 2 kann es dabei durch eine Zuordnungsliste vorgesehen sein, dass eine Gruppe G1 gebildet wird, die hier durch den Kreis symbolisiert ist, welche die Transaktionssysteme 1 mit den Kennungen CLI 1, CLI 2, CLI 3 umfasst. Ebenso kann es vorgesehen sein, weitere Gruppen GN in an sich beliebiger Anzahl zu bilden, welche Transaktionssysteme mit anderen Netzwerkkennungen umfasst.

Bei der Übermittlung eines Telekommunikationsdatensatzes im Rahmen einer hier beschriebenen Finanztransaktion werden demnach die Netzwerkkennungen der beteiligten Transaktionssysteme innerhalb des Netzwerkes 2 übermittelt, so dass im Telekommunikationsnetzwerk 2, beispielsweise durch einen dafür vorgesehenen Server, die Möglichkeit besteht, die übermittelten Daten auszuwerten und diese Daten innerhalb einer Datenbank DB 2 der jeweils zugehörigen Gruppe zuzuordnen.

Im vorliegenden Beispiel werden demnach Daten aus den Telekommunikationsdatensätzen der hier beispielhaft gezeigten drei Transaktionssystemen innerhalb der Datenbank DB 2 im Datensatz D (G1) gespeichert. Beispielsweise können so alle Umsätze, insbesondere Zahlungseingänge, bei den einzelnen Transaktionssystemen 1 der hier betrachteten Gruppe aufsummiert werden.

Die Datenbank DB 2 enthält demnach für alle gebildeten Gruppen G zumindest einen Teil der im Rahmen der jeweiligen Transaktion der Transaktionssysteme der jeweiligen Gruppe übermittelten Daten, wie beispielsweise die Geldbeträge, die bei jeder Transaktion transferiert werden.

Wie durch den Pfeil 3 symbolisiert, besteht die Möglichkeit, aus den verschiedenen Daten jeweils gruppenbezogen zu ermitteln, welche gesamten Einnahmen die Eigentümer der einer Gruppe zugehörigen Transaktionssysteme innerhalb eines vorgegebenen Zeitraums hatten.

Eine solche automatisch gebildete Information über die aufsummierten Einnahmen derjenigen natürlichen oder juristischen Personen, denen die Transaktionssysteme einer Gruppe gehören, kann demnach verglichen werden mit den Angaben, welche die Eigentümer, also die natürlichen oder juristischen Personen, im Rahmen ihrer steuerlichen Erklärungen machen.

Weicht die Summe der persönlich erklärten Einnahmen der verschiedenen Eigentümer der Transaktionssysteme einer Gruppe von der automatisch gebildeten Summe ab, so ist dies ein Indiz dafür, dass zumindest einer der Eigentümer und somit einer der natürlichen oder juristischen Personen eine falsche Angabe bei der Steuererklärung gemacht hat, so dass dies als Anlass genommen werden kann, um die Eigentümer derjenigen Transaktionssysteme, die in einer Gruppe zusammengefasst sind, einer näheren Prüfung zu unterziehen.

Es kann dabei auch vorgesehen sein, mit den Daten, die in der Datenbank zu einer Gruppe gespeichert werden, auch persönliche identifizierende Daten der beteiligten Personen zu speichern, insbesondere bezogen zu jeder Transaktion. Es kann dann vorgesehen sein, die persönlichen Daten bereit zustellen, wenn sich durch den vorherigen anonymen Vergleich eine Abweichung und somit ein Verdacht auf steuerliche Hinterziehung ergibt.

## Patentansprüche

1. Verfahren zur Erfassung von Finanztransaktionen, insbesondere von Bezahlvorgängen, die mittels wenigstens einem Transaktionssystem (1) über ein Telekommunikationsnetzwerk (2) abgewickelt werden, **dadurch gekennzeichnet, dass** zumindest ein Teil der Daten einer Telekommunikation zur Durchführung einer Finanztransaktion mittels wenigstens einem Transaktionssystem (1), insbesondere Daten über die Höhe eines transferierten Geldbetrages, wenigstens einer Gruppe (G1, GN) von mehreren Transaktionssystemen (1) verschiedener Eigentümer zugeordnet wird, wobei die der wenigstens einen Gruppe (G1, GN) zugeordneten Daten (D(G1)) in einer Datenbank (DB2), insbesondere einer Datenbank (DB2) innerhalb eines Telekommunikationsnetzwerks (2) gespeichert werden.

2. Verfahren nach Anspruch 1, **dadurch gekennzeichnet, dass** die Daten in der Datenbank (DB2) gespeichert werden mit einer Zuordnung zumindest zu derjenigen Gruppe (G1), die das Transaktionssystem (1) desjenigen Eigentümers umfasst, der eine Zahlung erhält.

3. Verfahren nach einem der vorherigen Ansprüche, **dadurch gekennzeichnet, dass** aus den Daten, die in die Datenbank (DB2) zu einer Gruppe (G1) gespeichert werden, die Summe der Geldbeträge gebildet wird, die der Gruppe (G1) zufließen und/oder von der Gruppe (G1) abfließen.

4. Verfahren nach einem der vorherigen Ansprüche, **dadurch gekennzeichnet, dass** Transaktionssysteme (1) verschiedener Eigentümer geografisch zu einer Gruppe zusammengefasst werden.

5. Verfahren nach einem der vorherigen Ansprüche, **dadurch gekennzeichnet, dass** Transaktionssysteme (1) verschiedener Eigentümer zu einer Gruppe (G1) zusammengefasst werden, die zumindest aus einem Teil der Daten bestimmt wird, die innerhalb eines Kommunikationsdatensatzes bei einer Transaktion übermittelt werden.

6. Verfahren nach Anspruch 5, **dadurch gekennzeichnet, dass** eine Gruppe (G1) bestimmt wird durch eine Information über die Funkzelle, in welcher eine Transaktion mittels mobiler Telekommunikation abgewickelt wird.

7. Verfahren nach Anspruch 5, **dadurch gekennzeichnet, dass** eine Gruppe (G1) bestimmt wird durch eine Information über eine Kommunikationskennung wenigstens eines der beteiligten Transaktionssysteme (1), insbesondere anhand einer Kennung, bevorzugt einer Gerätekennung oder Adresskennung, innerhalb des genutzten Telekommunikationsnetzwerks (2).

8. System zur Erfassung von Finanztransaktionen, insbesondere von Bezahlvorgängen, mit wenigstens einem Transaktionssystem (1), welches Daten einer Finanztransaktion über eine Telekommunikationsnetzwerk (2) versendet, **dadurch gekennzeichnet, dass** es eingerichtet ist, ein Verfahren nach einem der vorherigen Ansprüche durchzuführen.
